Europäisches Patentamt

European Patent Office

Office européen des brevets

(11) Numéro de publication: **0 450 242 A1**

## DEMANDE DE BREVET EUROPEEN

(21) Numéro de dépôt: 90402829.7

(22) Date de dépôt: **10.10.90**

(51) Int. Cl.⁵: **B60D 1/07**, B60D 1/04

(30) Priorité: **04.04.90 FR 9004315**

(43) Date de publication de la demande:
**09.10.91 Bulletin 91/41**

(84) Etats contractants désignés:
**AT BE DE DK ES GB IT LU NL SE**

(71) Demandeur: **POMMIER & CIE**
**7 avenue de la Mare, Zone d'Activités des Béthunes, Saint Ouen l'Aumone**
**F-95005 Cergy Pontoise Cédex(FR)**

(72) Inventeur: **Froissard, Alain**
**14 rue du Bordelais**
**F-95100 Argenteuil(FR)**

(74) Mandataire: **Madeuf, Claude Alexandre Jean et al**
**CABINET MADEUF 3, avenue Bugeaud**
**F-75116 Paris(FR)**

(54) Dispositif d'attelage pour véhicule.

(57) Dispositif d'attelage pour véhicule comportant un corps de crochet (1) délimitant un berceau (4, 4a) pour un organe d'attelage (5) d'un véhicule mené, caractérisé en ce que le corps d'attelage est réalisé d'une seule pièce et supporte par un axe (7) une menotte (8) à laquelle est articulé un verrou (11) dont un talon (12) est maintenu en regard d'une butée (16, 17, 18) du corps de crochet par une goupille de sécurité (21), ledit verrou formant une gâchette (13) pour provoquer son pivotement autour de l'axe (10) qui le porte en même temps que la menotte (8) est basculée autour de l'axe (7) qui la relie au corps de crochet.

FIG. 1

La présente invention concerne les dispositifs d'attelage utilisés pour relier un véhicule tracteur à un véhicule mené.

L'invention s'applique plus particulièrement à ceux de ces dispositifs qui sont utilisés sur des véhicules poids lourds pour relier un camion à une remorque. L'invention crée un nouveau dispositif qui peut être mis en oeuvre indifféremment avec des corps de crochet d'attelage du type à berceau fermé ou du type à boule et elle permet d'obtenir un verrouillage efficace tant en position attelée qu'en position dételée des moyens d'attelage.

Conformément à l'invention, le dispositif d'attelage pour véhicule comportant un corps de crochet délimitant un berceau pour un organe d'attelage d'un véhicule mené est caractérisé en ce que le corps d'attelage supporte par un axe, une menotte à laquelle est articulé un verrou dont un talon est maintenu en regard d'une butée du corps de crochet par une goupille de sécurité, ledit verrou formant une gâchette pour provoquer son pivotement autour de l'axe qui le porte en même temps que la menotte est basculée autour de l'axe qui la relie au corps de crochet.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une élévation latérale en partie arrachée du dispositif d'attelage pour véhicule réalisé conformément à l'invention.

La fig. 2 est une élévation d'un verrou que comporte le dispositif d'attelage de la fig. 1.

La fig. 3 est une élévation vue sensiblement suivant la ligne III-III de la fig. 1.

La fig. 4 est une élévation analogue à la fig. 1 d'une variante.

La fig. 5 est une élévation vue suivant la ligne V-V de la fig. 4.

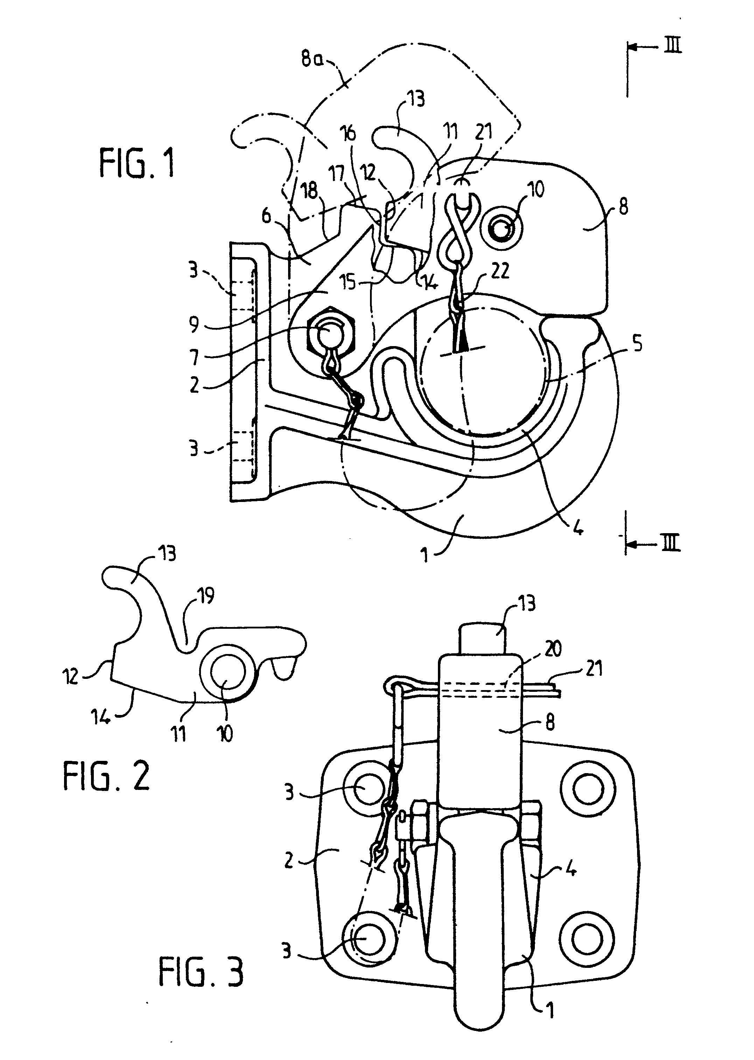

L'attelage illustré aux fig. 1 à 3 comporte un corps de crochet 1 qui est formé à partir d'une semelle 2 destinée à être fixée, par exemple boulonnée, au châssis d'un véhicule tracteur. Des trous 3 sont prévus dans la semelle 2 pour le passage de boulons ou autres organes de fixation.

Le corps de crochet délimite un berceau 4 qui dans la réalisation des fig. 1 à 3, s'étend sur environ 180°. Le berceau 4 est destiné à recevoir un organe d'attelage, par exemple un axe ou un anneau 5 faisant partie d'un véhicule mené non représenté.

Le corps de crochet 1 forme entre le berceau 4 et la semelle 2 une nervure 6 dans laquelle est passé un axe d'articulation 7 d'une menotte évidée 8 articulée par des branches 9 que délimite une chape qu'elle forme.

La menotte évidée 8 supporte, par ailleurs, un axe 10 pour l'articulation d'un verrou 11.

Le verrou 11 délimite un talon 12 au-dessus duquel est formée une gâchette 13.

Une rampe 14 est aussi délimitée par le verrou 11 à partir du talon 12 et cette rampe 14 prend normalement appui contre une portée 15 de la nervure 6 lorsque l'attelage est verrouillé.

Dans la position verrouillée, qui est représentée en trait plein au dessin, le talon 12 est disposé en regard d'une butée 16 également formée par la nervure 6, ladite butée 16 délimitant sur son dessus une rampe 17 précédant une encoche 18.

Le verrou 11 présente, sur son dessus, une encoche 19 qui, en position de verrouillage de l'attelage, est disposée en coïncidence avec un trou 20 prévu dans la menotte 8 pour la mise en place d'une goupille de verrouillage 21.

Une chaînette 22 est prévue pour relier en permanence la goupille de verrouillage 21 à l'attelage, par exemple à l'axe 7 de celui-ci.

Dans la position illustrée en trait plein au dessin, la goupille 21 empêche que le verrou 11 puisse être pivoté. En effet, la rampe 14 prenant appui sur la portée 15 et le talon 12 faisant face à la butée 16, il n'est donc pas possible de faire pivoter la menotte 8 autour de l'axe 7 pour l'écarter du corps de crochet.

Pour permettre de dételer l'organe 5, la goupille 21 est retirée et le verrou 11 est pivoté autour de l'axe 10, par exemple en engageant un doigt dans la gâchette 13 en même temps que la menotte 8 tend à être basculée en sens opposé. Le mouvement amorcé étant poursuivi, la rampe 14 vient en appui sur la rampe 17 de sorte qu'il suffit ensuite de poursuivre le mouvement de basculement de la menotte 8 jusqu'au moment où la rampe 14 vient prendre place dans l'encoche 18 dans une position pour laquelle le verrou 11 assure le maintien de la menotte 8 dans la position 8a illustrée en traits mixtes.

En remettant en place la goupille 21, on empêche à nouveau le pivotement du verrou 11 par rapport à la menotte 8, ce qui permet de maintenir la menotte dans la position 8a pour effectuer des manoeuvres de l'organe d'attelage 5.

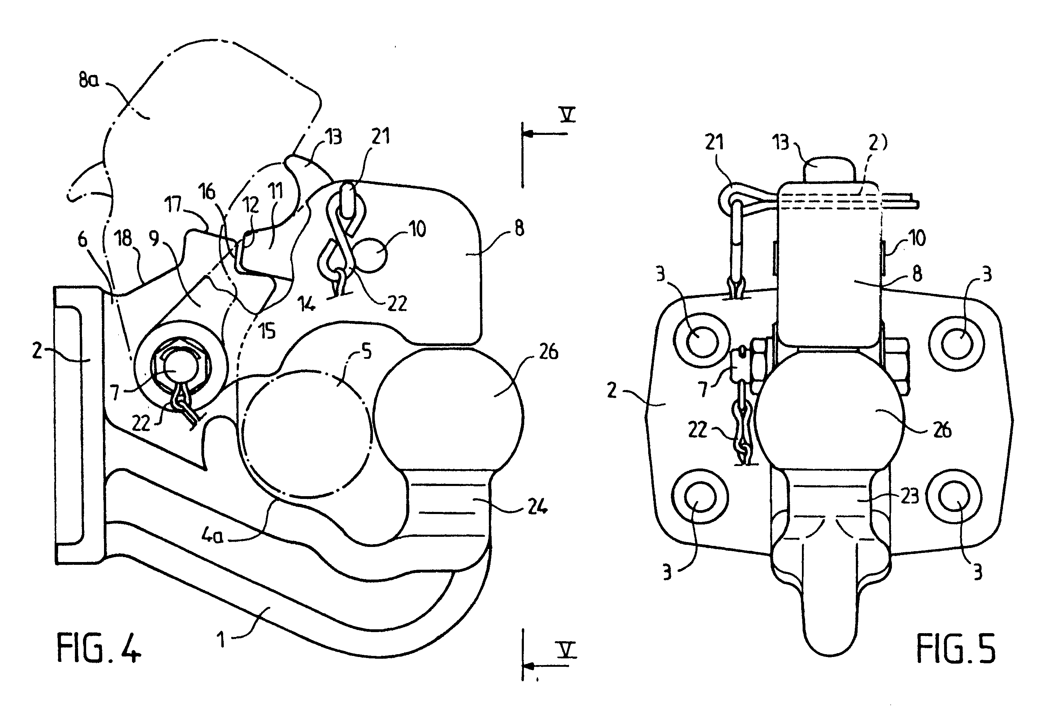

Dans la réalisation des fig. 4 et 5, les mêmes numéros de référence désignent les mêmes organes qu'aux fig. 1 à 3.

Le berceau 4a que forme le corps de crochet 1 s'étend seulement sur un angle d'environ 90° et il est prolongé par un segment 24 suivi par une boule 26. La boule 26 est de préférence formée d'une seule pièce avec le corps 1 comme l'illustre le dessin.

Le dessin montre que l'organe d'attelage 5 du véhicule mené est disposé dans le berceau 4a et que la menotte 8 en position verrouillée se trouve placée juste au-dessus du sommet de la boule 26. Les manoeuvres pour le déverrouillage sont les mêmes que celles décrites dans ce qui précède.

L'invention n'est pas limitée aux exemples de réalisation, représentés et décrits en détail, car diverses modifications peuvent y être apportées sans sortir de son cadre.

**Revendications**

1. Dispositif d'attelage pour véhicule comportant un corps de crochet (1) délimitant un berceau (4, 4a) pour un organe d'attelage (5) d'un véhicule mené, caractérisé en ce que le corps d'attelage est réalisé d'une seule pièce et supporte par un axe (7) une menotte (8) à laquelle est articulé un verrou (11) dont un talon (12) est maintenu en regard d'une butée (16, 17, 18) du corps de crochet par une goupille de sécurité (21), ledit verrou formant une gâchette (13) pour provoquer son pivotement autour de l'axe (10) qui le porte en même temps que la menotte (8) est basculée autour de l'axe (7) qui la relie au corps de crochet.

2. Dispositif d'attelage suivant la revendication 1, caractérisé en ce que le corps de crochet délimite une rampe (17) au-dessus de la butée, ladite rampe (17) menant à l'encoche (18) dans laquelle le verrou est engagé après basculement de la menotte (8) dans le sens pour lequel cette dernière découvre le berceau (4, 4a).

3. Dispositif d'attelage suivant l'une des revendications 1 et 2, caractérisé en ce que le verrou forme sur son dessous une rampe (14) correspondant à la rampe (17) du corps de crochet.

4. Dispositif d'attelage suivant l'une des revendications 1 à 3, caractérisé en ce que la menotte (8) est évidée et forme une chape (9) articulée sur un axe (7) traversant une nervure (6) du corps de crochet, nervure qui délimite la butée (16), la rampe (17) et l'encoche (18) coopérant avec la rampe (14) du verrou (11).

5. Dispositif d'attelage suivant l'une des revendications 1 à 4, caractérisé en ce que le berceau (4) du corps de crochet s'étend sur environ 180°.

6. Dispositif d'attelage suivant l'une des revendications 1 à 4, caractérisé en ce que le berceau (4a) s'étend sur environ 90° et est prolongé par un segment (24) suivi par une boule (26).

7. Dispositif d'attelage suivant l'une des revendications 1 à 4, caractérisé en ce que le corps (9) forme directement la boule (26).

8. Dispositif d'attelage suivant l'une des revendications 1 à 7, caractérisé en ce que la menotte (8) présente un trou (20) pour le passage d'une goupille (21) de verrouillage du verrou (11) dans chacune des deux positions pouvant être occupées par la menotte (8).

FIG. 1

FIG. 2

FIG. 3

FIG.4

FIG.5

EP 0 450 242 A1

**Office européen
des brevets**

Numéro de la demande

**RAPPORT DE RECHERCHE
EUROPEENNE**

**EP 90 40 2829**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 963 266   (THELIN)<br>* Le document entier *<br>— — — | 1-5,7,8 | B 60 D 1/07<br>B 60 D 1/04 |
| X | US-A-2 522 791   (HENRY KETEL)<br>* Colonne 1, ligne 54 - colonne 4, ligne 12; figures 1,2 * | 1,2,3 | |
| A | — — — | 4,6 | |
| X | US-A-2 431 694   (JOHNSON)<br>* Colonne 2, ligne 3 - colonne 3, ligne 38; figures 1-4 * | 1,2,3,5 | |
| A | — — — | 4 | |
| X | DE-U-1 735 470   (ROCKINGER)<br>* Revendications 1-4; figures 1-3 *<br>— — — | 1,4,5 | |
| X | DE-U-1 728 698   (ADE-WERK)<br>* Page 2, figures *<br>— — — | 1,4,5 | |
| A | US-A-2 426 532   (W.J. TIERNEY)<br>* Colonne 2, ligne 26 - colonne 4, ligne 73; figures 1,6 *<br>— — — | 1-6 | |
| A | US-A-4 721 324   (BLACKLAW)<br>* Colonne 2, ligne 63 - colonne 4, ligne 29; figures 1-5 *<br>— — — | 1,2,5 | **DOMAINES TECHNIQUES RECHERCHES (Int. Cl.5)** |
| A | US-A-3 052 487   (H.C. HARBERS)<br>* Colonne 2, ligne 12 - colonne 4, ligne 71; figures 1-5 *<br>— — — — — | | B 60 D |

Le présent rapport de recherche a été établi pour toutes les revendications

| Lieu de la recherche | Date d'achèvement de la recherche | Examinateur |
|---|---|---|
| La Haye | 20 décembre 90 | BRUNELLO B. |